# EUROPEAN PATENT APPLICATION

(11) **EP 4 592 686 A1**
(43) Date of publication of application: **30.07.2025**
(21) Application number: 24216446.5
(22) Date of filing: 29.11.2024
(51) Int. Cl.: G01N 35/02, G01N 35/04, G01N 35/10

(54) **AUTOMATIC ANALYZER**

(30) Priority: 26.01.2024 JP 2024010365
(71) Applicant: Jeol Ltd., Akishima-shi, Tokyo 196-8558 (JP)
(72) Inventor: NAKAMURA, Mizuki, Tokyo, 196-8558 (JP); YAITA, Tsuyoshi, Tokyo, 196-8558 (JP)
(74) Representative: Boult Wade Tennant LLP

(57) **Abstract**

An automatic analyzer (1) includes a diluted specimen cell turntable (3), a plurality of reaction lines (6A, 6B), and a diluted specimen dispensing unit (22). The diluted specimen cell turntable (3) has a plurality of diluted specimen cells (P3) that contains a diluted specimen. The plurality of reaction lines (6A, 6B) is supplied with the diluted specimen, in which the diluted specimen is reacted with a reagent. The diluted specimen dispensing unit (22) supplies the diluted specimen contained in the diluted specimen cell (P3) of the diluted specimen cell turntable (3) to the plurality of reaction lines (6A, 6B). The diluted specimen dispensing unit (22) supplies the diluted specimen from one diluted specimen line provided in the diluted specimen cell turntable (3) to the plurality of reaction lines (6A, 6B).

## Description

### BACKGROUND

### Technical Field

The present invention relates to an automatic analyzer.

### Related Art

Automatic analyzers are used for tests in various fields such as biochemical tests and blood transfusion tests, which analyze multiple components contained in a specimen quickly and with high accuracy. An automatic analyzer includes a reaction table for performing a reaction between a specimen and a reagent, and a diluted specimen cell turntable for supplying a diluted specimen diluted in the reaction table. Then, the automatic analyzer dispenses the diluted specimen from the diluted specimen cell disposed in a diluted specimen line of the diluted specimen cell turntable, and supplies the reaction cell disposed in a reaction line of the reaction table.

Examples of such an automatic analyzer include an automatic analyzer as described in Patent Literature 1. Patent Literature 1 describes a technique of providing two reaction lines and two diluted specimen lines for supplying diluted specimens to the two reaction lines. In the technique described in Patent Literature 1, each of the two diluted specimen lines supplies a diluted specimen to a specific reaction line of the two reaction lines.

### Citation List

### Patent Literature

Patent Literature 1: WO 2010/117045 A

### SUMMARY

However, in the technique described in Patent Literature 1, it is necessary to prepare diluted specimen lines according to the number of reaction lines. As the number of diluted specimen lines increases, the number of mechanisms for stirring the diluted specimen cell disposed in each diluted specimen line, the number of mechanisms for supplying a specimen to the diluted specimen cell of each diluted specimen line, the number of mechanisms for cleaning the diluted specimen cell, and the like also increase. As a result, the technique described in Patent Literature 1 has a problem that the size of the device increases and the structure of the device becomes complicated.

In view of the above problems, an object of the present invention is to provide an automatic analyzer capable of suppressing an increase in size of the analyzer while including a plurality of reaction lines.

To solve the problem described above and to achieve the object of the present invention, an automatic analyzer includes a diluted specimen cell turntable, a plurality of reaction lines and a diluted specimen dispensing unit. The diluted specimen cell turntable has a plurality of diluted specimen cells that contains a diluted specimen that is a specimen that has been diluted. The plurality of reaction lines is supplied with the diluted specimen contained in the diluted specimen cell of the diluted specimen cell turntable, in which the diluted specimen is reacted with a reagent. The diluted specimen dispensing unit supplies the diluted specimen contained in the diluted specimen cell of the diluted specimen cell turntable to the plurality of reaction lines. The diluted specimen dispensing unit supplies the diluted specimen from one diluted specimen line provided in the diluted specimen cell turntable to the plurality of reaction lines.

The automatic analyzer of the present invention can suppress an increase in size of the analyzer while including a plurality of reaction lines.

### BRIEF DESCRIPTION OF DRAWINGS

FIG. 1 is a schematic configuration diagram illustrating an automatic analyzer according to an embodiment of the present invention;
FIG. 2 is a block diagram illustrating a control system around a diluted specimen cell turntable in the automatic analyzer according to the embodiment of the present invention;
FIG. 3 is a flowchart illustrating an example of diluted specimen supply operation in the automatic analyzer according to the embodiment of the present invention;
FIG. 4 is an explanatory diagram schematically illustrating a movement position of a diluted specimen cell for each cycle;
FIG. 5 is a time chart illustrating the operation of each device during one cycle (basic cycle) in the automatic analyzer according to the embodiment of the present invention;
FIG. 6 is a table illustrating the operation of each device in each cycle in the automatic analyzer according to the embodiment of the present invention;
FIG. 7 is a table illustrating a modification of the operation of each device in each cycle in the automatic analyzer according to the embodiment of the present invention;
FIG. 8 is a diagram illustrating a remaining amount of a diluted specimen in the automatic analyzer according to the embodiment of the present invention;
FIG. 9 is a diagram illustrating a remaining amount of a diluted specimen in a conventional automatic analyzer;
FIG. 10 is a perspective view illustrating a diluted specimen cell turntable in the automatic analyzer according to the embodiment of the present invention;
FIG. 11 is a side view illustrating the diluted specimen cell turntable in the automatic analyzer according to the embodiment of the present invention;
FIG. 12 is an enlarged view illustrating a backlash adjustment mechanism of the diluted specimen cell turntable in the automatic analyzer according to the embodiment of the present invention;
FIG. 13 is a diagram illustrating an example of an operation speed profile of the diluted specimen cell turntable in the automatic analyzer according to the embodiment of the present invention;
FIG. 14 is a diagram illustrating the relationship between the high/low speed ratio and the amplitude/settling time of the diluted specimen cell turntable in the automatic analyzer according to the embodiment of the present invention;
FIG. 15 is a sectional view illustrating a diluted specimen cell in the automatic analyzer according to the embodiment of the present invention;
FIG. 16 is a diagram illustrating the relationship between the depth and the liquid amount of the diluted specimen cell; and
FIG. 17 is a diagram illustrating the depth of the diluted specimen cell and the operation time.

### DETAILED DESCRIPTION

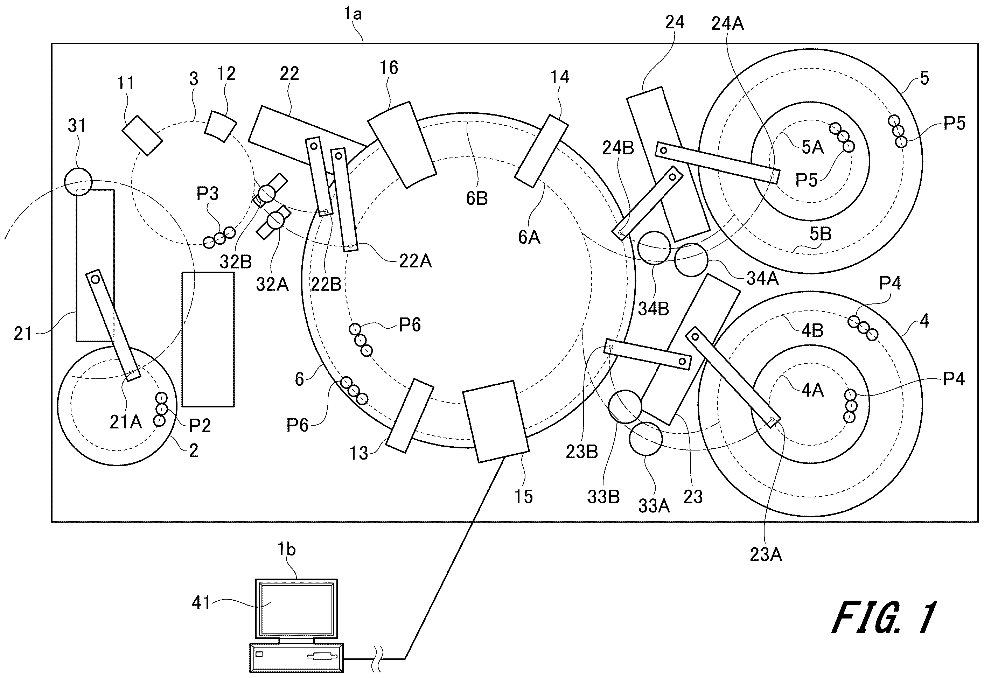

Hereinafter, an embodiment of an automatic analyzer of the present invention will be described with reference to FIGS. 1 to 17. In the drawings, the same members are denoted by the same reference numerals.

### 1. Embodiments

### 1-1. Configuration of Automatic Analyzer

First, an automatic analyzer according to an embodiment (hereinafter, referred to as "present example") of the present invention will be described with reference to FIG. 1.

FIG. 1 is a schematic configuration diagram illustrating the automatic analyzer according to the embodiment.

An automatic analyzer 1 illustrated in FIG. 1 is, for example, a biochemical analyzer that automatically measures the amount of a specific component contained in a biological sample such as blood or urine. The automatic analyzer 1 includes a measurement unit 1a and a control unit 1b.

The measurement unit 1a includes, for example, a sample turntable 2, a diluted specimen cell turntable 3, a first reagent turntable 4, a second reagent turntable 5, and a reaction turntable 6. The measurement unit 1a also includes a diluted specimen cell stirring mechanism 11, a diluted specimen cell cleaning mechanism 12, a first reaction stirring mechanism 13, a second reaction stirring mechanism 14, a multi-wavelength photometer 15, and a reaction cell cleaning mechanism 16.

The measurement unit 1a also includes a specimen dispensing unit 21, a diluted specimen dispensing unit 22, a first reagent dispensing unit 23, a second reagent dispensing unit 24, and a plurality of probe cleaning mechanisms 31, 32A, 32B, 33A, 33B, 34A, and 34B.

On the other hand, the control unit 1b includes a display unit 41, and further includes an input unit, a storage unit, and a control unit as described in detail later. Hereinafter, details of these components will be described in order of the measurement unit 1a and the control unit 1b.

### <Measurement Unit 1a>

### [Sample Turntable 2]

The sample turntable 2 is formed in a substantially columnar shape. The sample turntable 2 holds a plurality of specimen containers P2 arranged in a plurality of rows along a circumferential direction. The sample turntable 2 rotates in the circumferential direction with a drive mechanism (not illustrated) and conveys the plurality of held specimen containers P2 along the circumferential direction.

In each specimen container P2 held on the sample turntable 2, a specimen to be measured and a control specimen for accuracy control are stored as a dispensing liquid. The sample turntable 2 conveys these various specimens to be measured to a predetermined position.

In addition to the specimen container P2, a diluent container in which a diluent is stored and a hemolytic agent container in which a hemolytic agent for performing a hemolysis treatment is stored may be held in the sample turntable 2.

The sample turntable 2 may also have a function of cooling the held specimen container P2 and other containers.

### [Diluted Specimen Cell Turntable 3]

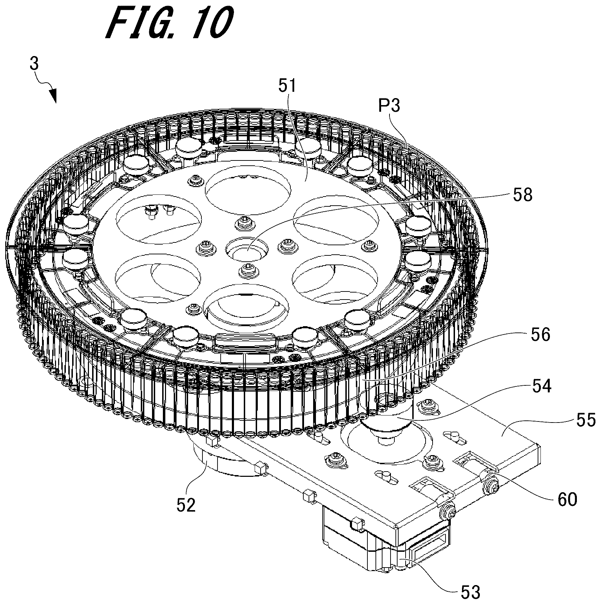

The diluted specimen cell turntable 3 is formed in a substantially cylindrical shape. The diluted specimen cell turntable 3 holds a plurality of diluted specimen cells P3 storing the dispensing liquid side by side along the circumferential direction. This forms one diluted specimen line in which the plurality of diluted specimen cells P3 are arranged in the circumferential direction in the diluted specimen cell turntable 3. In the diluted specimen cell turntable 3, a drive mechanism rotates in the circumferential direction with a drive motor 53 (see FIG. 10) and conveys the plurality of held diluted specimen cells P3 along the circumferential direction. The drive of the drive motor 53 is controlled by the control unit 1b.

The specimen that has been diluted (hereinafter, referred to as "diluted specimen") sucked from the specimen container P2 disposed on the sample turntable 2 is injected into the diluted specimen cell P3 held on the diluted specimen cell turntable 3 as a dispensing liquid.

The detailed operation and configuration of the diluted specimen cell turntable 3 will be described later.

### [First Reagent Turntable 4 and Second Reagent Turntable 5]

The first reagent turntable 4 is formed in a substantially columnar shape. The first reagent turntable 4 holds a plurality of first reagent containers P4 arranged in two rows along the circumferential direction. The inner line for arranging the plurality of first reagent containers P4 is referred to as a first reagent line 4A, and the outer line for arranging the plurality of first reagent containers P4 is referred to as a second reagent line 4B.

The first reagent turntable 4 rotates in the circumferential direction with a drive mechanism (not illustrated) and conveys the plurality of held first reagent containers P4 along the circumferential direction. In the plurality of first reagent containers P4, a first reagent is stored as a dispensing liquid.

The second reagent turntable 5 is formed in a substantially columnar shape. The second reagent turntable 5 holds a plurality of second reagent containers P5 arranged in two rows along the circumferential direction. The inner line for arranging the plurality of second reagent containers P5 is referred to as a first reagent line 5A, and the outer line for arranging the plurality of second reagent containers P5 is referred to as a second reagent line 5B.

The second reagent turntable 5 rotates in the circumferential direction with a drive mechanism (not illustrated) and conveys the plurality of held second reagent containers P5 along the circumferential direction. In the second reagent containers P5, the second reagent is stored as a dispensing liquid.

### [Reaction Turntable 6]

The reaction turntable 6 is formed in a substantially columnar shape. The reaction turntable 6 holds a plurality of reaction cells P6 arranged in two rows along the circumferential direction. The inner line for arranging the plurality of reaction cells P6 is referred to as a first reaction line 6A, and the outer line for arranging the plurality of reaction cells P6 is referred to as a second reaction line 6B. The reaction turntable 6 rotates in the circumferential direction with a drive mechanism (not illustrated) and conveys the plurality of held reaction cells P6 along the circumferential direction.

In the reaction cell P6, each of the diluted specimen collected from the diluted specimen cell P3 of the diluted specimen cell turntable 3 and the first reagent collected from the first reagent container P4 of the first reagent turntable 4 or the second reagent collected from the second reagent container P5 of the second reagent turntable 5 is dispensed in a predetermined amount. Then, in the reaction cell P6, the diluted specimen and the first reagent or the second reagent are stirred to perform the reaction.

The reaction turntable 6 as described above includes a thermostatic bath (not illustrated). The thermostatic bath constantly keeps the temperature of the reaction cell P6 constant. When the automatic analyzer 1 does not include the diluted specimen cell turntable 3, the specimen collected from the specimen container P2 of the sample turntable 2 is dispensed into the reaction cell P6 held on the reaction turntable 6.

### [Diluted Specimen Cell Stirring Mechanism 11]

The diluted specimen cell stirring mechanism 11 is disposed around the diluted specimen cell turntable 3. The diluted specimen cell stirring mechanism 11 includes a stirring mechanism and a drive mechanism for driving the stirring mechanism. The diluted specimen cell stirring mechanism 11 inserts two stirring members of the stirring mechanism into the diluted specimen cell P3 held on the diluted specimen cell turntable 3 to stir the specimen to be measured and the diluent.

### [Diluted Specimen Cell Cleaning Mechanism 12]

The diluted specimen cell cleaning mechanism 12 is disposed around the diluted specimen cell turntable 3. The diluted specimen cell cleaning mechanism 12 cleans the diluted specimen cell P3 after the diluted specimen is sucked by the diluted specimen dispensing unit 22 described later.

### [First Reaction Stirring Mechanism 13 and Second Reaction Stirring Mechanism 14]

The first reaction stirring mechanism 13 and the second reaction stirring mechanism 14 are disposed around the reaction turntable 6. The first reaction stirring mechanism 13 and the second reaction stirring mechanism 14 stir the diluted specimen and the first reagent or the second reagent in the reaction cell P6 held on the reaction turntable 6.

The first reaction stirring mechanism 13 and the second reaction stirring mechanism 14 have a stirring mechanism and a drive mechanism for driving the stirring mechanism. The first reaction stirring mechanism 13 and the second reaction stirring mechanism 14 insert a stirring member of the stirring mechanism into the reaction cell P6 held at a predetermined position of the reaction turntable 6, and stir the diluted specimen (or the specimen) and the first reagent or the second reagent. This advances the reaction of the diluted specimen, the first reagent, and the second reagent.

### [Multi-Wavelength Photometer 15]

The multi-wavelength photometer 15 is a specific example of a measurement unit according to the present invention. The multi-wavelength photometer 15 is disposed around the reaction turntable 6. The multi-wavelength photometer 15 performs optical measurement on the diluted specimen reacted with the first reagent and the second reagent in the reaction cell P6 to detect the reaction state of the diluted specimen. The multi-wavelength photometer 15 outputs the amounts of various components in the specimen to the control unit 1b as absorbance.

### [Reaction Cell Cleaning Mechanism 16]

The reaction cell cleaning mechanism 16 is disposed around the reaction turntable 6. The reaction cell cleaning mechanism 16 cleans the inside of the reaction cell P6 in which the test has been completed.

### [Specimen Dispensing Unit 21]

The specimen dispensing unit 21 is disposed around the sample turntable 2 and the diluted specimen cell turntable 3. The specimen dispensing unit 21 includes a thin-tube-shaped specimen supply probe 21A extending in an up-down direction. The specimen dispensing unit 21 operates according to a preset measurement program. The specimen dispensing unit 21 inserts the tip of the specimen supply probe 21A into the specimen in the specimen container P2 held on the sample turntable 2 to suck a predetermined amount of specimen.

The specimen dispensing unit 21 also supplies a predetermined amount of diluent (for example, physiological saline or pure water) into the specimen supply probe 21A. The specimen dispensing unit 21 inserts the tip of the specimen supply probe 21A into the diluted specimen cell P3 of the diluted specimen cell turntable 3, and discharges the specimen sucked from the specimen container P2 and the predetermined amount of diluent into the diluted specimen cell P3. With this configuration, the specimen to be measured that has been diluted to the concentration of the predetermined multiple is injected into the diluted specimen cell P3.

The specimen supply probe 21A includes a liquid level detection mechanism (not illustrated). The liquid level detection mechanism detects contact between the tip of the specimen probe and the liquid level based on, for example, capacitance between the liquid level and the tip of the specimen probe.

### [Diluted Specimen Dispensing Unit 22]

The diluted specimen dispensing unit 22 is disposed between the diluted specimen cell turntable 3 and the reaction turntable 6. The diluted specimen dispensing unit 22 includes diluted specimen supply probes 22A and 22B. The diluted specimen supply probes 22A and 22B are each formed in a thin tube shape extending in the up-down direction. The diluted specimen dispensing unit 22 operates according to a preset measurement program.

The diluted specimen dispensing unit 22 inserts the tips of the diluted specimen supply probes 22A and 22B into the same or different diluted specimen cells P3 of the diluted specimen cell turntable 3, and sucks a predetermined amount of diluted specimen. The diluted specimen dispensing unit 22 inserts the tip of the first diluted specimen supply probe 22A into the reaction cell P6 arranged in the first reaction line 6A of the reaction turntable 6, and discharges the diluted specimen sucked from the diluted specimen cell P3 into the reaction cell P6. The diluted specimen dispensing unit 22 also inserts the tip of the second diluted specimen supply probe 22B into the reaction cell P6 arranged in the second reaction line 6B of the reaction turntable 6, and discharges the diluted specimen sucked from the diluted specimen cell P3 into the reaction cell P6.

### [First Reagent Dispensing Unit 23]

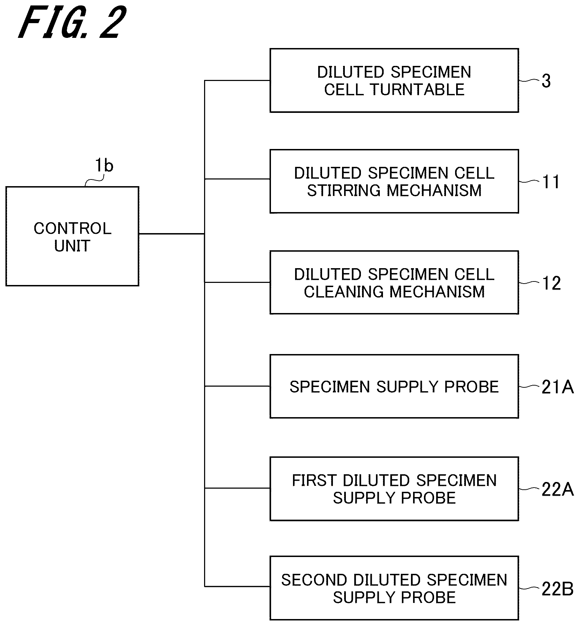

The first reagent dispensing unit 23 is disposed between the reaction turntable 6 and the first reagent turntable 4. The first reagent dispensing unit 23 includes first reagent probes 23A and 23B (see FIG. 2). The first reagent probes 23A and 23B are each formed in a thin tube shape extending in the up-down direction. The first reagent dispensing unit 23 operates according to a preset measurement program.

The first reagent dispensing unit 23 inserts the tip of the first reagent probe 23A into the first reagent container P4 arranged in the first reagent line 4A of the first reagent turntable 4 to suck a predetermined amount of the first reagent. The first reagent dispensing unit 23 also inserts the tip of the first reagent probe 23A into the reaction cell P6 arranged in the first reaction line 6A of the reaction turntable 6, and discharges the first reagent sucked from the first reagent container P4.

The first reagent dispensing unit 23 inserts the tip of the first reagent probe 23B into the first reagent container P4 arranged in the second reagent line 4B of the first reagent turntable 4 to suck a predetermined amount of the first reagent. The first reagent dispensing unit 23 also inserts the tip of the first reagent probe 23B into the reaction cell P6 arranged in the second reaction line 6B of the reaction turntable 6, and discharges the first reagent sucked from the first reagent container P4.

### [Second Reagent Dispensing Unit 24]

The second reagent dispensing unit 24 is disposed between the reaction turntable 6 and the second reagent turntable 5. The second reagent dispensing unit 24 has the same configuration as the first reagent dispensing unit 23 and includes second reagent probes 24A and 24B (see FIG. 2). The second reagent dispensing unit 24 operates according to a preset measurement program.

The second reagent dispensing unit 24 inserts the tip of the second reagent probe 24A into the second reagent container P5 arranged in the first reagent line 5A of the second reagent turntable 5 to suck a predetermined amount of the second reagent. The second reagent dispensing unit 24 also inserts the tip of the second reagent probe 24A into the reaction cell P6 arranged in the first reaction line 6A of the reaction turntable 6, and discharges the second reagent sucked from the second reagent container P5.

The second reagent dispensing unit 24 inserts the tip of the second reagent probe 24B into the second reagent container P5 arranged in the second reagent line 5B of the second reagent turntable 5 to suck a predetermined amount of the second reagent. The second reagent dispensing unit 24 also inserts the tip of the second reagent probe 24B into the reaction cell P6 arranged in the second reaction line 6B of the reaction turntable 6, and discharges the second reagent sucked from the second reagent container P5.

### [Probe Cleaning Mechanism 31]

The probe cleaning mechanism 31 is disposed on the path of the specimen supply probe 21A of the specimen dispensing unit 21. The probe cleaning mechanism 31 cleans the specimen supply probe 21A. The probe cleaning mechanism 31 includes a cleaning liquid supply pipe and a cleaning tank. The cleaning liquid supply pipe supplies a cleaning liquid in a shower shape to the tip of the specimen supply probe 21A disposed in the upper portion of the cleaning tank. This cleans the outer wall of the specimen supply probe 21A.

### [Probe Cleaning Mechanisms 32A and 32B]

The probe cleaning mechanism 32A is disposed on the path of the first diluted specimen supply probe 22A of the diluted specimen dispensing unit 22. The probe cleaning mechanism 32A cleans the first diluted specimen supply probe 22A. The probe cleaning mechanism 32B is disposed on the path of the second diluted specimen supply probe 22B of the diluted specimen dispensing unit 22. The probe cleaning mechanism 32B cleans the second diluted specimen supply probe 22B. Each of the probe cleaning mechanisms 32A and 32B includes a cleaning liquid supply pipe and a cleaning tank. The cleaning liquid supply pipes respectively provided in the probe cleaning mechanisms 32A and 32B supply a cleaning liquid in a shower shape to the tips of the first diluted specimen supply probes 22A and 22B each disposed in the upper portion of the corresponding cleaning tank. This cleans the outer walls of the first diluted specimen supply probes 22A and 22B.

### [Probe Cleaning Mechanisms 33A and 33B]

The probe cleaning mechanism 33A is disposed on the path of the first reagent probe 23A of the first reagent dispensing unit 23. The probe cleaning mechanism 33A cleans the first reagent probe 23A. The probe cleaning mechanism 33B is disposed on the path of the first reagent probe 23B of the first reagent dispensing unit 23. The probe cleaning mechanism 33B cleans the first reagent probe 23B. Each of the probe cleaning mechanisms 33A and 33B includes a cleaning liquid supply pipe and a cleaning tank.

The cleaning liquid supply pipes respectively provided in the probe cleaning mechanisms 33A and 33B supply a cleaning liquid in a shower shape to the tips of the first reagent probes 23A and 23B each disposed in the upper portion of the corresponding cleaning tank. This cleans the outer walls of the first reagent probes 23A and 23B.

### [Probe Cleaning Mechanisms 34A and 34B]

The probe cleaning mechanism 34A is disposed on the path of the second reagent probe 24A of the second reagent dispensing unit 24. The probe cleaning mechanism 34A cleans the second reagent probe 24A. The probe cleaning mechanism 34B is disposed on the path of the second reagent probe 24B of the second reagent dispensing unit 24. The probe cleaning mechanism 34B cleans the second reagent probe 24B. Each of the probe cleaning mechanisms 34A and 34B includes a cleaning liquid supply pipe and a cleaning tank.

The cleaning liquid supply pipes respectively provided in the probe cleaning mechanisms 34A and 34B supply a cleaning liquid in a shower shape to the tips of the second reagent probes 24A and 24B each disposed in the upper portion of the corresponding cleaning tank. This cleans the outer walls of the second reagent probes 24A and 24B.

### <Control Unit 1b>

The control unit 1b is connected to the drive mechanism of each component constituting the measurement unit 1a described above, the multi-wavelength photometer 15, and a specimen supply device for supplying a specimen to the measurement unit 1a.

The specimen supply device includes a supply unit, a recovery unit, a conveyance unit, and a barcode reader.

The supply unit supplies a specimen rack storing a plurality of (for example, five) specimen containers storing specimens to the measurement unit 1a. The recovery unit recovers the specimen rack that has been subjected to the dispensing process by the specimen dispensing unit 21. The conveyance unit conveys the specimen rack from the supply unit to the recovery unit. The barcode reader is disposed between the supply unit and the specimen collection position.

When the operator inputs the specimen rack into the supply unit, the conveyance unit conveys the specimen rack to a barcode reading position of the barcode reader. The barcode reader reads barcode information attached to the specimen container. Subsequently, the conveyance unit coveys the specimen rack to the specimen collection position. When the dispensing process with the specimen dispensing unit 21 is completed, the conveyance unit conveys the specimen rack to the recovery unit.

FIG. 2 is a block diagram illustrating a control system around the diluted specimen cell turntable 3.

As illustrated in FIG. 2, the control unit 1b is connected with the diluted specimen cell turntable 3, the diluted specimen cell stirring mechanism 11, the diluted specimen cell cleaning mechanism 12, the specimen supply probe 21A, the first diluted specimen supply probe 22A, and the second diluted specimen supply probe 22B. Then, the control unit 1b controls the operations of the diluted specimen cell turntable 3, the diluted specimen cell stirring mechanism 11, the diluted specimen cell cleaning mechanism 12, the specimen supply probe 21A, the first diluted specimen supply probe 22A, and the second diluted specimen supply probe 22B.

### 1-2. Diluted Specimen Supply Operation

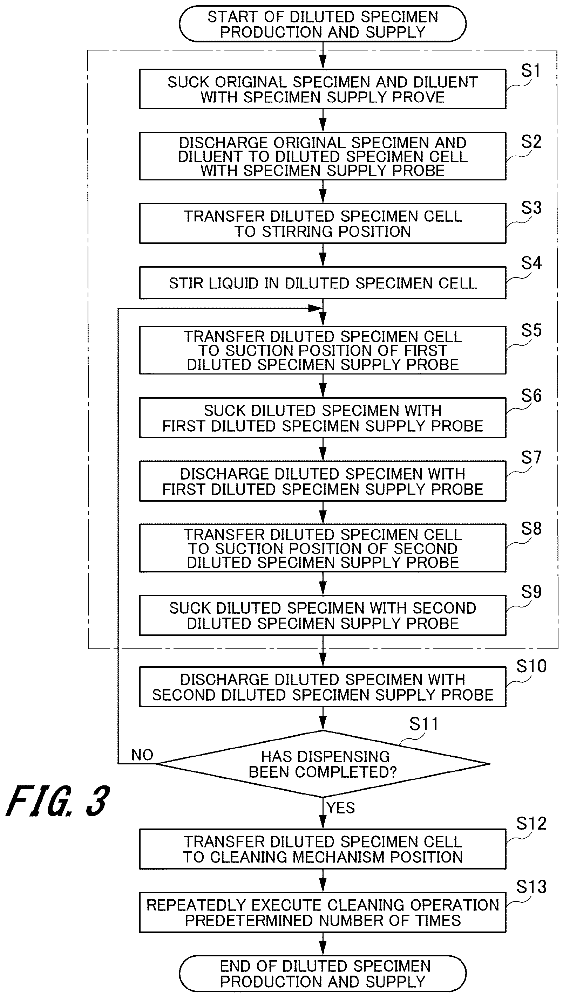

Next, an operation example of supplying the diluted specimen in the automatic analyzer 1 having the above-described configuration from the diluted specimen cell turntable 3 to the reaction turntable 6 will be described with reference to FIGS. 3 to 7.

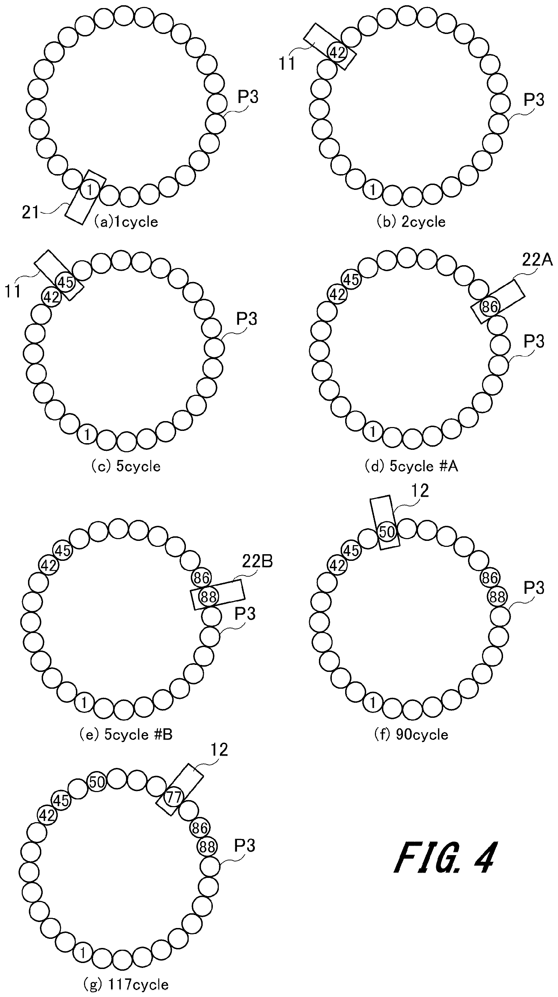

FIG. 3 is a flowchart illustrating an example of diluted specimen supply operation. The flowchart illustrated in FIG. 3 describes an example in which one diluted specimen is created and stirred in the diluted specimen cell P3 and supplied to the reaction cell P6 for each analysis item. FIG. 4 is an explanatory diagram schematically illustrating the movement position of the diluted specimen cell P3 for each cycle. In the following description, an example in which the number of diluted specimen cells disposed in the diluted specimen cell turntable 3 is 120 will be described. Then, an example is illustrated in which the mount of basic movement in one cycle in the diluted specimen cell turntable 3 is for 41 cells.

As illustrated in FIG. 3, the specimen supply prove 21A sucks an original specimen from the specimen container P2 of the sample turntable 2 (step S1). Then, the specimen supply probe 21A discharges the sucked original specimen and a diluent to the diluted specimen cell P3 of the diluted specimen cell turntable 3 (step S2). In the process of steps S1 and S2, as illustrated in FIG. 4, the diluted specimen is supplied to the diluted specimen cell P3 disposed at a dilution line cell position "1" in the diluted specimen cell turntable 3.

Next, the control unit 1b rotates the diluted specimen cell turntable 3 along the circumferential direction, and transfers the diluted specimen cell P3 to which the diluted specimen is supplied in the process of step S1 to a stirring position (step S3). Then, the diluted specimen cell stirring mechanism 11 performs stirring operation on the diluted specimen cell P3 supplied with the diluted specimen (step S4).

In this example, the stirring operation is performed twice. Specifically, assuming that the cycle in which the diluted specimen is supplied to the diluted specimen cell P3 disposed at the dilution line cell position "1" is the first cycle, the first stirring operation is performed on the diluted specimen cell P3 in the second cycle. Then, in the fifth cycle, the second stirring operation is performed on the diluted specimen cell P3. One of the two stirring members of the diluted specimen cell stirring mechanism 11 is used for the first stirring operation, and the other stirring member is used for the second stirring operation.

As illustrated in FIGS. 4B and 4C, the diluted specimen cell P3 is conveyed to the dilution line cell position "42" at the time of the first stirring operation. The diluted specimen cell P3 is conveyed to the dilution line cell position "45" at the time of the second stirring operation. Thus, the dilution line cell position "42" becomes the first stirring operation position (first stirring position), and the dilution line cell position "42" becomes the second stirring operation position (second stirring position).

Here, as described above, since the number of diluted specimen cells is 120 and the amount of basic movement of one cycle is 41, the cells are moved by 123 cells of 41 × 3 in 3 cycles for one circle. In this manner, the cell position shifted in one circle is close as three cells. Thus, as described above, by performing the first stirring operation in the second cycle and performing the second stirring operation in the fifth cycle which is three cycle after the second cycle, the first and second stirring positions of the stirring members in the diluted specimen cell stirring mechanism 11, that is, the first stirring position and the second stirring position can be kept within a close distance. This makes it possible to perform the stirring operation twice by commonly using the drive mechanism for driving the two stirring members of the diluted specimen cell stirring mechanism 11, without providing an independent drive mechanism for each of the two stirring members of the diluted specimen cell stirring mechanism 11. In addition, by performing the stirring operation twice, the stirring efficiency can be secured even though the stop time is shortened.

Next, the control unit 1b rotates the diluted specimen cell turntable 3 along the circumferential direction, and transfers the diluted specimen cell P3, which has been stirred in the process of step S3, to the sorting position of the first diluted specimen supply probe 22A (step S5). Then, the first diluted specimen supply probe 22A sucks the diluted specimen from the diluted specimen cell P3 transferred to the sorting position (step S6). Next, the first diluted specimen supply probe 22A discharges the sucked diluted specimen to the reaction cell P6 arranged in the first reaction line 6A of the reaction turntable 6 (step S7). As illustrated in FIG. 4D, the diluted specimen cell P3 to be sorted into the first reaction line 6A in the process of steps S6 and S7 is conveyed to the dilution line cell position "86".

Next, the control unit 1b rotates the diluted specimen cell turntable 3 along the circumferential direction to transfer the diluted specimen cell P3 dispensed to the first reaction line 6A to the sorting position of the second diluted specimen supply probe 22B (step S8). Then, the second diluted specimen supply probe 22B sucks the diluted specimen from the diluted specimen cell P3 transferred to the sorting position (step S9). Next, the second diluted specimen supply probe 22B discharges the sucked diluted specimen to the reaction cell P6 arranged in the second reaction line 6B of the reaction turntable 6 (step S10). As illustrated in FIG. 4E, the diluted specimen cell P3 to be sorted into the second reaction line 6B in the process of steps S9 and S10 is conveyed to the dilution line cell position "88".

In the example illustrated in FIG. 4, the dilution line cell positions for sorting into the first reaction line 6A and the second reaction line 6B are set to "86" and "88", but the present invention is not limited to this configuration, and any dilution line cell position can be set.

Next, in the process of step S1 to step S10, the control unit 1b determines whether dispensing (sorting) of the diluted specimen produced in one diluted specimen cell P3 to the reaction cell P6 is completed (step S11). Then, when the control unit 1b has determined that the dispensing has not been completed in the process of step S11, the process returns to the process of step S5, and the process of step S5 to step S10 is repeated. That is, step S5 to step S10 are repeated until the diluted specimens corresponding to the number of analysis items allocated to the same specimen are dispensed.

When the control unit 1b has determined that the dispensing has been completed in the process of step S11, the diluted specimen cell turntable 3 is rotated along the circumferential direction to transfer the diluted specimen cell P3 to the cell cleaning position (step S12). Then, the diluted specimen cell cleaning mechanism 12 repeatedly executes the cleaning operation on the diluted specimen cell P3 a predetermined number of times (step S13). As illustrated in FIG. 4F, the starting point of the diluted specimen cell cleaning mechanism 12 is, for example, the dilution line cell position "50". Then, as illustrated in FIG. 4G, the ending point of the diluted specimen cell cleaning mechanism 12 is, for example, the dilution line cell position "77". Then, when the cleaning operation illustrated in step S13 has been completed, the production and supply operation of the diluted specimen ends.

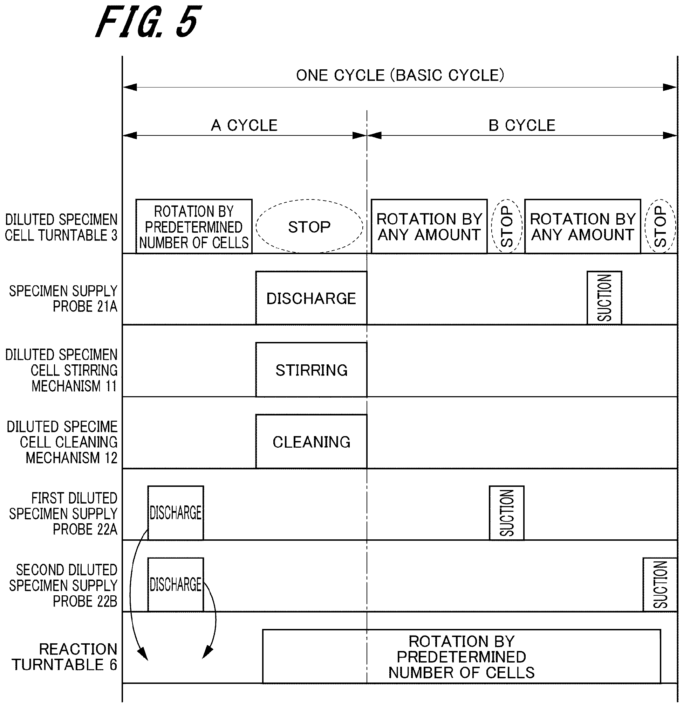

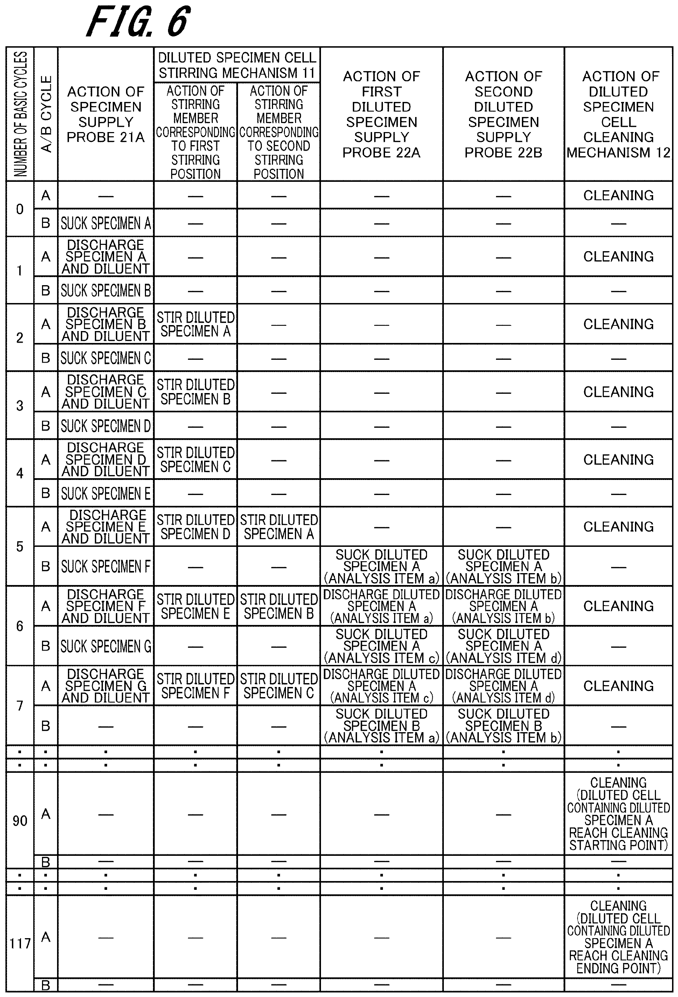

Next, the entire operation of the diluted specimen cell turntable 3, the specimen supply probe 21A, the diluted specimen cell stirring mechanism 11, the diluted specimen supply probes 22A and 22B, and the diluted specimen cell cleaning mechanism 12 in the automatic analyzer 1 will be described with reference to FIGS. 5 to 7. FIG. 5 is a time chart illustrating the operation of each device in one cycle (basic cycle). FIG. 6 is a table illustrating the operation of each device in each cycle.

As illustrated in FIG. 5, during the basic cycle, an A cycle is performed as a first operation, and a B cycle is performed as a second operation. In the A cycle, the movement operation of the diluted specimen cell turntable 3, the discharge operation for the original specimen and the diluent of the specimen supply probe 21A, the stirring operation of the diluted specimen cell stirring mechanism 11, the cleaning operation of the diluted specimen cell cleaning mechanism 12, and the discharge operation for the diluted specimen of the diluted specimen supply probes 22A and 22B are performed.

In the A cycle, the diluted specimen cell turntable 3 rotates by 41 cells (predetermined number of cells) as the amount of basic movement and stops. Then, when the diluted specimen cell turntable 3 is stopped, the discharge operation for the original specimen and the diluent of the specimen supply probe 21A, the stirring operation of the diluted specimen cell stirring mechanism 11, and the cleaning operation of the diluted specimen cell cleaning mechanism 12 are performed. That is, in the A cycle, the diluted specimen cell turntable 3 performs a movement operation for moving by the amount of basic movement once.

The specimen supply probe 21A discharges the holding original specimen sucked from the specimen container P2 of the sample turntable 2 at the time of the B cycle of the previous basic cycle to the diluted specimen cell P3 conveyed to the position for producing the diluted specimen together with the diluent. While the diluted specimen cell turntable 3 in the A cycle is moving by the amount of basic movement, the diluted specimen supply probes 22A and 22B discharge the diluted specimen sucked and held at the time of the B cycle of the previous basic cycle to the reaction cells P6 of the first reaction line 6A and the second reaction line 6B of the reaction turntable 6.

In the B cycle, the movement operation of the diluted specimen cell turntable 3, the suction operation for the original specimen of the specimen supply probe 21A, and the suction operation of the diluted specimen supply probes 22A and 22B are performed. In the B cycle, the first diluted specimen supply probe 22A performs the suction operation on the diluted specimen cell P3 conveyed to "86" that is a first diluted specimen sorting position, and the second diluted specimen supply probe 22B performs the suction operation on the diluted specimen cell P3 conveyed to "88" that is a second diluted specimen sorting position.

Thus, the diluted specimen cell turntable 3 conveys (rotates by any first amount) the target diluted specimen cell P3 to "86" that is the first diluted specimen sorting position and stops in the B cycle. Then, the suction operation with the first diluted specimen supply probe 22A is performed. Thereafter, the diluted specimen cell turntable 3 conveys (rotate by any second amount) the target diluted specimen cell P3 to "88", which is the second diluted specimen sorting position, then stops. Then, the suction operation with the second diluted specimen supply probe 22B is performed. That is, in the B cycle, the diluted specimen cell turntable 3 performs the movement operation for moving by the any first amount and the any second amount twice. In this manner, in the B cycle, the diluted specimen cell turntable 3 stops basically the same number of times as the number of reaction lines (twice in this example).

As described above, the first diluted specimen supply probe 22A and the second diluted specimen supply probe 22B that have sucked the diluted specimen discharge the held diluted specimen to the reaction cell P6 of the first reaction line 6A and the second reaction line 6B of the reaction turntable 6 at the A cycle of the next basic cycle. The suction operation for the original specimen of the specimen supply probe 21A may be performed at any timing as long as it is in the B cycle.

In this manner, the diluted specimen cell turntable 3 of the present example performs three movement operations of moving by the amount of basic movement performed in the A cycle and by the any first amount and the any second amount performed in the B cycle during the basic cycle. That is, the diluted specimen cell turntable 3 stops the number of times (three times in this example) obtained by adding one to the number of reaction lines by performing the movement operation the number of times (three times in this example) obtained by adding one to the number of reaction lines during the basic cycle. In other words, the diluted specimen cell turntable 3 stops the number of times corresponding to the number of reaction lines by performing the movement operation the number of times corresponding to the number of reaction lines during the basic cycle.

Although the movement direction and the amount of movement of the amount of basic movement are fixed, the movement direction and the movement amount of the any first amount and the any second amount are freely set according to the dilution line cell position immediately before the movement of the diluted specimen cell P3 to be conveyed, which is conveyed to the first diluted specimen sorting position and the second diluted specimen sorting position. The moving direction and the amount of movement of the any first amount and the any second amount are set so that the amount of movement of the diluted specimen cell turntable 3 is minimized.

The first movement direction having the amount of basic movement during one cycle operation and the second and third movement directions having the any first amount and the any second amount are not limited to the same direction, and may be different directions. That is, the movement direction of the amount of basic movement during one cycle operation, and the second and third movement directions of the any first amount and the any second amount are appropriately set according to the supply position, the stirring position, the cleaning position, the dispensing position to the first reaction line 6A, and the dispensing position to the second reaction line 6B at the dilution line cell position.

The amount of basic movement indicating the amount of first movement during the one cycle operation, and the any first amount and the any second amount which are the amounts of second and third movement are stored in the control unit 1b. The amount of movement of any first amount and the any second amount include "0". That is, the diluted specimen supply operation, the stirring operation (first time, second time), and the cleaning operation are performed on the diluted specimen cell P3 transferred to a predetermined position (supply position, stirring position, cleaning position) at the dilution line cell position by the first movement in the A cycle during one cycle operation. At this time, when the diluted specimen cell P3 containing the diluted specimen to be dispensed into the reaction cell P6 of the first reaction line 6A in the B cycle of the same basic cycle is stopped at the first diluted specimen dispensing position, the amount of movement by the any first amount is "0", and the diluted specimen cell turntable 3 does not rotate. The suction operation on the diluted specimen with the first diluted specimen supply probe 22A is performed on the diluted specimen cell P3 transferred to the first diluted specimen sorting position by the second movement in the B cycle during the one basic cycle operation. At this time, when the diluted specimen cell P3 containing the diluted specimen to be dispensed into the reaction cell P6 of the second reaction line 6B in the B cycle of the same basic cycle is stopped at the second diluted specimen dispensing position, the amount of movement by the any second amount is "0", and the diluted specimen cell turntable 3 does not rotate.

FIG. 6 is a table illustrating the operation of each device in each cycle. An example in which the number of the diluted specimen cells P3 disposed on the diluted specimen cell turntable 3 is 120, and the amount of movement of the diluted specimen cell turntable 3 in the A cycle is for 41 cells will be described. As illustrated in FIG. 4, the production position for the diluted specimen is "1", the first stirring position is "42", the second stirring position is "45", and the cleaning positions are "50" to "77". Then, the first diluted specimen sorting position, that is, the sorting position to the first reaction line 6A is "86", and the second diluted specimen sorting position, that is, the sorting position to the second reaction line 6B is "88". Then, an example in which the measurement of the analysis items a to d is performed for each of the specimens A to G will be described.

As illustrated in FIG. 6, when the basic cycle number is "0", the diluted specimen cell cleaning mechanism 12 performs the cleaning operation on the diluted specimen cells P3 positioned at the cleaning positions "50" to "77" on the diluted specimen cell turntable 3 at the time of the A cycle. At the B cycle, the specimen supply probe 21A sucks the specimen A from the specimen container P2 of the sample turntable 2.

Next, at the time of the A cycle of the basic cycle number "1", the specimen supply probe 21A discharges the sucked specimen A and the diluent to the diluted specimen cell P3 conveyed to the diluted specimen production position "1" in the diluted specimen cell turntable 3. As a result, the diluted specimen A is produced in the diluted specimen cell P3 positioned at the diluted specimen production position "1". At the B cycle, the specimen supply probe 21A sucks the specimen B from the specimen container P2 of the sample turntable 2.

At the time of the A cycle of the basic cycle number "2", the specimen supply probe 21A discharges the sucked specimen B and the diluent to the diluted specimen cell P3 conveyed to the diluted specimen production position "1" in the diluted specimen cell turntable 3. As a result, the diluted specimen B is produced in the diluted specimen cell P3 positioned at the diluted specimen production position "1". At this time, the diluted specimen cell stirring mechanism 11 stirs the diluted specimen A of the diluted specimen cell P3 positioned at the first stirring position "42". Then, at the B cycle, the specimen supply probe 21A sucks the specimen C from the specimen container P2 of the sample turntable 2.

At the time of the A cycle of the basic cycle number "3", the specimen supply probe 21A discharges the sucked specimen C and diluent to the diluted specimen cell P3 conveyed to the diluted specimen production position "1" in the diluted specimen cell turntable 3. As a result, the diluted specimen C is produced in the diluted specimen cell P3 positioned at the diluted specimen production position "1". At this time, the diluted specimen cell stirring mechanism 11 stirs the diluted specimen B of the diluted specimen cell P3 positioned at the first stirring position "42". Then, at the B cycle, the specimen supply probe 21A sucks the specimen D from the specimen container P2 of the sample turntable 2.

At the time of the A cycle of the basic cycle number "4", the specimen supply probe 21A discharges the sucked specimen D and the diluent to the diluted specimen cell P3 conveyed to the diluted specimen production position "1" in the diluted specimen cell turntable 3. As a result, the diluted specimen D is produced in the diluted specimen cell P3 positioned at the diluted specimen production position "1". At this time, the diluted specimen cell stirring mechanism 11 stirs the diluted specimen C of the diluted specimen cell P3 positioned at the first stirring position "42". Then, at the B cycle, the specimen supply probe 21A sucks the specimen E from the specimen container P2 of the sample turntable 2.

At the time of the A cycle of the basic cycle number "5", the specimen supply probe 21A discharges the sucked specimen E and the diluent to the diluted specimen cell P3 conveyed to the diluted specimen production position "1" in the diluted specimen cell turntable 3. As a result, the diluted specimen E is produced in the diluted specimen cell P3 positioned at the diluted specimen production position "1". At this time, the diluted specimen cell stirring mechanism 11 stirs the diluted specimen D of the diluted specimen cell P3 positioned at the first stirring position "42". At this time, the diluted specimen cell P3 having the diluted specimen A moves by 123 cells of 41 × 3 in 3 cycles from the first stirring operation. Thus, the diluted specimen A has moved to the second stirring position "45" as illustrated in FIG. 4C. Then, the diluted specimen cell stirring mechanism 11 stirs the diluted specimen A of the diluted specimen cell P3 positioned at the second stirring position "45". As a result, the stirring operation is performed twice on the diluted specimen A.

At the B cycle, the specimen supply probe 21A sucks the specimen F from the specimen container P2 of the sample turntable 2. When the diluted specimen cell turntable 3 moves by the any first amount in the B cycle, the diluted specimen cell P3 containing the diluted specimen A moves to the first diluted specimen sorting position "86". Then, the first diluted specimen supply probe 22A sucks the diluted specimen A from the diluted specimen cell P3 conveyed to the first diluted specimen sorting position "86" for measurement of the analysis item a. Thereafter, when the diluted specimen cell turntable 3 moves by the any second amount, the diluted specimen cell P3 containing the diluted specimen A moves to the second diluted specimen sorting position "88". Then, the second diluted specimen supply probe 22B sucks the diluted specimen A from the diluted specimen cell P3 conveyed to the first diluted specimen sorting position "88" for measurement of the analysis item b.

At the time of the A cycle of the basic cycle number "6", the specimen supply probe 21A discharges the sucked specimen F and the diluent to the diluted specimen cell P3 conveyed to the diluted specimen production position "1" in the diluted specimen cell turntable 3. As a result, the diluted specimen F is produced in the diluted specimen cell P3 positioned at the diluted specimen production position "1". At this time, the diluted specimen cell stirring mechanism 11 stirs the diluted specimen E of the diluted specimen cell P3 positioned at the first stirring position "42". At this time, the diluted specimen cell P3 having the diluted specimen B moves by 123 cells of 41 × 3 in 3 cycles from the first stirring operation. Thus, the diluted specimen B has moved to the second stirring position "45" as illustrated in FIG. 4C. Then, the diluted specimen cell stirring mechanism 11 stirs the diluted specimen B of the diluted specimen cell P3 positioned at the second stirring position "45".

When the diluted specimen cell turntable 3 in the A cycle moves by the amount of basic movement, the first diluted specimen supply probe 22A discharges the diluted specimen A sucked for measurement of the analysis item a to the reaction cell P6 of the first reaction line 6A of the reaction turntable 6. At this time, the second diluted specimen supply probe 22B discharges the diluted specimen A sucked for measurement of the analysis item b to the reaction cell P6 of the second reaction line 6B of the reaction turntable 6.

At the B cycle, the specimen supply probe 21A sucks the specimen G from the specimen container P2 of the sample turntable 2. As a result, all the specimens necessary for analysis can be sucked from the specimen container P2 of the sample turntable 2. Thus, in the subsequent basic cycle number, the suction operation by the specimen supply probe 21A is not performed.

When the diluted specimen cell turntable 3 moves by the any first amount in the B cycle, the diluted specimen cell P3 containing the diluted specimen A moves to the first diluted specimen sorting position "86". Then, the first diluted specimen supply probe 22A sucks the diluted specimen A from the diluted specimen cell P3 conveyed to the first diluted specimen sorting position "86" for measurement of the analysis item c. Thereafter, when the diluted specimen cell turntable 3 moves by the any second amount, the diluted specimen cell P3 containing the diluted specimen A moves to the second diluted specimen sorting position "88". Then, the second diluted specimen supply probe 22B sucks the diluted specimen A from the diluted specimen cell P3 conveyed to the first diluted specimen sorting position "88" for measurement of the analysis item d.

Next, at the time of the A cycle of the basic cycle number "7", the specimen supply probe 21A discharges the sucked specimen G and the diluent to the diluted specimen cell P3 conveyed to the diluted specimen production position "1" in the diluted specimen cell turntable 3. As a result, the diluted specimen G is produced in the diluted specimen cell P3 positioned at the diluted specimen production position "1". Then, all the specimens necessary for analysis can be discharged to the diluted specimen cell P3. Thus, in the subsequent basic cycle number, the discharge operation with the specimen supply probe 21A is not performed.

At the A cycle, the diluted specimen cell stirring mechanism 11 stirs the diluted specimen F of the diluted specimen cell P3 positioned at the first stirring position "42". At this time, the diluted specimen cell P3 having the diluted specimen C moves by 123 cells of 41 × 3 in 3 cycles from the first stirring operation. Thus, the diluted specimen B has moved to the second stirring position "45" as illustrated in FIG. 4C. Then, the diluted specimen cell stirring mechanism 11 stirs the diluted specimen C of the diluted specimen cell P3 positioned at the second stirring position "45".

When the diluted specimen cell turntable 3 in the A cycle moves by the amount of basic movement, the first diluted specimen supply probe 22A discharges the diluted specimen A sucked for measurement of the analysis item c to the reaction cell P6 of the first reaction line 6A of the reaction turntable 6. At this time, the second diluted specimen supply probe 22B discharges the diluted specimen A sucked for measurement of the analysis item d to the reaction cell P6 of the second reaction line 6B of the reaction turntable 6. As a result, the diluted specimen A for measurement of the analysis items a to d can be supplied to the reaction cell P6 of the reaction turntable 6.

When the diluted specimen cell turntable 3 moves by the any first amount in the B cycle, the diluted specimen cell P3 containing the diluted specimen B moves to the first diluted specimen sorting position "86". Then, the first diluted specimen supply probe 22A sucks the diluted specimen B from the diluted specimen cell P3 conveyed to the first diluted specimen sorting position "86" for measurement of the analysis item a. Thereafter, when the diluted specimen cell turntable 3 moves by the any second amount, the diluted specimen cell P3 containing the diluted specimen B moves to the second diluted specimen sorting position "88". Then, the second diluted specimen supply probe 22B sucks the diluted specimen B from the diluted specimen cell P3 conveyed to the first diluted specimen sorting position "88" for measurement of the analysis item b.

Thereafter, in the basic cycle number, the diluted specimens B to G are stirred and supplied to the reaction cell P6 of the reaction turntable 6 for the measurement of the analysis items a to d. Since the description is the same as the operation with the basic cycle number described above, the description thereof will be omitted.

At the basic cycle number "90", the diluted specimen cell P3 containing the diluted specimen A reaches the dilution line cell position "50", which is the starting position of the cleaning position. Then, the diluted specimen cell cleaning mechanism 12 performs a cleaning operation on the diluted specimen cell P3 positioned at the cleaning starting position "50".

Further, at the basic cycle number "117", the diluted specimen cell P3 that used to contain the diluted specimen A reaches the dilution line cell position "77", which is the ending position of the cleaning position. Then, the diluted specimen cell cleaning mechanism 12 performs a cleaning operation on the diluted specimen cell P3 positioned at the cleaning ending position "77". As a result, the operation of cleaning the diluted specimen cell P3 that used to contain the diluted specimen A is completed.

During the A cycle of the basic cycle number described above, the diluted specimen cell cleaning mechanism 12 performs the cleaning operation on the diluted specimen cell P3 that has been conveyed from the cleaning position "50" to "77" and for which the operation of supplying the diluted specimen to the reaction cell P6 of the reaction turntable 6 has been completed.

Here, in the conventional automatic analyzer, the timing at which the diluted specimen supply probe sorts the diluted specimen from the diluted specimen cell is only once in one cycle. On the other hand, in the automatic analyzer 1 of the present example, in the operation after the basic cycle number "6", the supply operation for the diluted specimen, the stirring operation, the cleaning operation, and the dispensing operation for the diluted specimen to the reaction lines 6A and 6B are performed in parallel in the same cycle. As a result, analysis can be performed in parallel using a plurality of reaction lines, and analysis processing capability in the automatic analyzer 1 can be improved.

As described above, the automatic analyzer 1 of the present example has a plurality of reaction lines including the first reaction line 6A and the second reaction line 6B. This makes it possible to perform analysis in parallel using a plurality of reaction lines and improve analysis processing capability in the automatic analyzer 1.

Further, although a plurality of reaction lines are provided, only one diluted specimen line supplies the diluted specimen to the plurality of reaction lines. This can suppress an increase in size of the automatic analyzer 1 and can reduce the number of stirring mechanisms, specimen supply probes, and the like.

In the example illustrated in FIG. 6, an example in which the first diluted specimen supply probe 22A and the second diluted specimen supply probe 22B suck the same diluted specimen during the B cycle has been described, but the present invention is not limited to this configuration. For example, the first diluted specimen supply probe 22A and the second diluted specimen supply probe 22B may suck different diluted specimens during the B cycle.

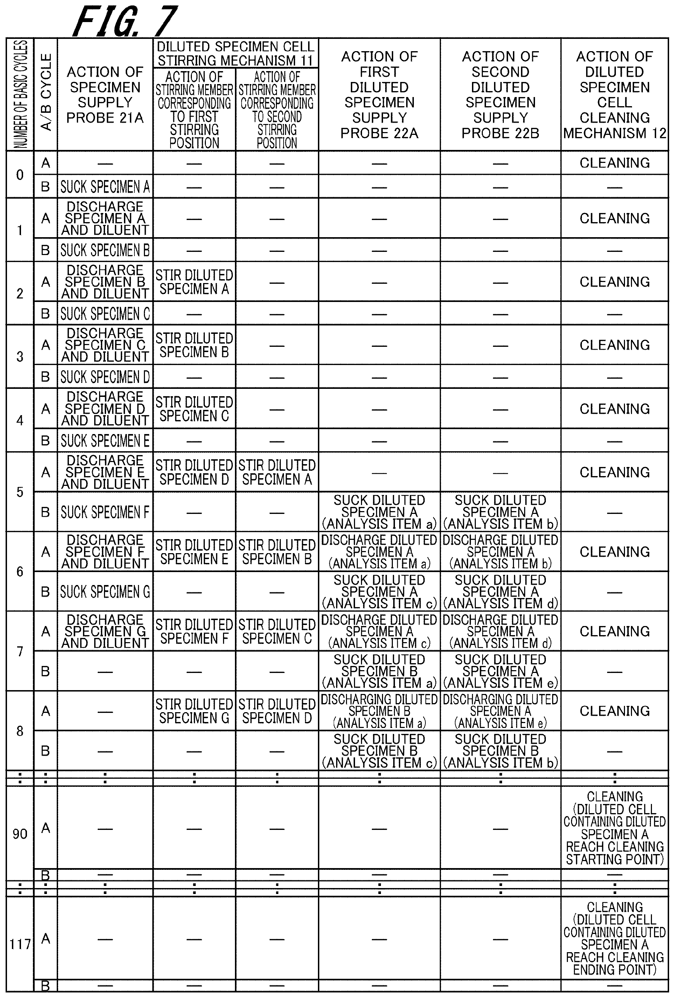

FIG. 7 is a table illustrating a modification of the operation of each device in each cycle. In the modification illustrated in FIG. 7, an example in which the measurement of the analysis items a to e is performed for each of the specimens A to G will be described. Since the operation from the basic cycle number "0" to the basic cycle number "6" is the same as that of the operation example illustrated in FIG. 6, the description thereof will be omitted.

When the diluted specimen cell turntable 3 moves by the any first amount at the time of the B cycle of the basic cycle number "7", the diluted specimen cell P3 containing the diluted specimen B moves to the first diluted specimen sorting position "86". Then, the first diluted specimen supply probe 22A sucks the diluted specimen B from the diluted specimen cell P3 conveyed to the first diluted specimen sorting position "86" for measurement of the analysis item a. On the other hand, when the diluted specimen cell turntable 3 moves by the any second amount thereafter, the diluted specimen cell P3 containing the diluted specimen A moves to the second diluted specimen sorting position "88". Then, the second diluted specimen supply probe 22B sucks the diluted specimen A from the diluted specimen cell P3 conveyed to the first diluted specimen sorting position "88" for measurement of the analysis item e.

Then, at the time of the A cycle of the basic cycle number "8", the first diluted specimen supply probe 22A discharges the diluted specimen B sucked for measurement of the analysis item a to the reaction cell P6 of the first reaction line 6A of the reaction turntable 6. At this time, the second diluted specimen supply probe 22B discharges the diluted specimen A sucked for measurement of the analysis item e to the reaction cell P6 of the second reaction line 6B of the reaction turntable 6. As a result, the diluted specimen A for measurement of the analysis items a to e can be supplied to the reaction cell P6 of the reaction turntable 6.

The other operations are the same as that of the operation example illustrated in FIG. 6, and thus the description thereof will be omitted.

### 1-3. Supply Remaining Amount of Diluted Specimen

Next, a difference in the remaining amount of the diluted specimen after the dispensing operation between the conventional automatic analyzer and the automatic analyzer 1 of the present example will be described.

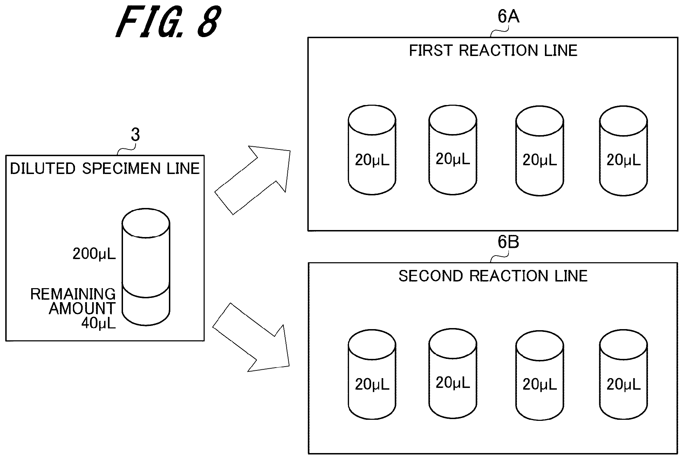

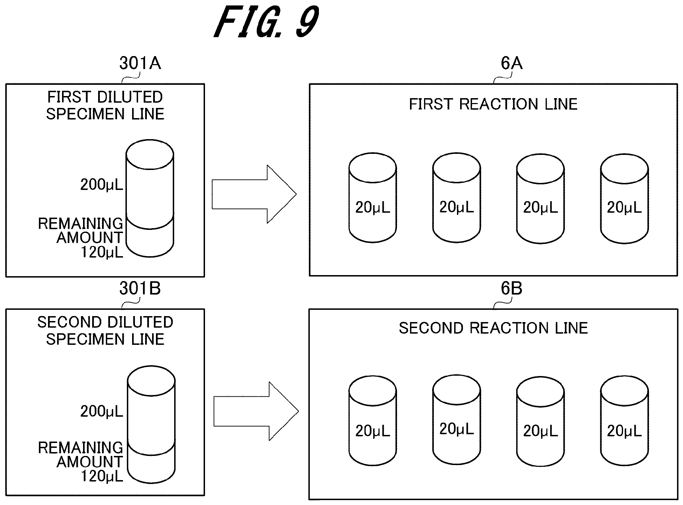

FIG. 8 is a diagram illustrating a remaining amount of the diluted specimen in the automatic analyzer 1 of the present example, and FIG. 9 is a diagram illustrating a remaining amount of the diluted specimen in the conventional automatic analyzer.

The conventional automatic analyzer illustrated in FIG. 9 has two reaction lines 6A and 6B, like the automatic analyzer 1 of the present example. The conventional automatic analyzer includes a so-called plurality of diluted specimen lines including a first diluted specimen line 301A that supplies a diluted specimen to the first reaction line 6A and a second diluted specimen line 301B that supplies the diluted specimen to the second reaction line 6B.

On the other hand, in the automatic analyzer 1 of the present example, as described above, the diluted specimen is supplied from one diluted specimen line to the two reaction lines 6A and 6B.

Here, a case where, for example, analysis for each of four items is requested for the reaction lines 6A and 6B, and 20 µL of the diluted specimen is required for each item will be described. In this case, each of the two reaction lines 6A and 6B requires 20 µL × 4 = 80 µL of the diluted specimen. The diluted specimen cell P3 holds 200 µL of the diluted specimen.

As illustrated in FIG. 9, in the conventional automatic analyzer, 80 µL of the diluted specimen is dispensed from each of the diluted specimen lines 301A and 301B. Thus, in the conventional automatic analyzer, 120 µL of the diluted specimen remains in the diluted specimen cell P3 of each of the diluted specimen lines 301A and 301B.

On the other hand, in the automatic analyzer 1 of the present example, since the diluted specimen is supplied from one diluted specimen line to the two reaction lines 6A and 6B, the diluted specimen remaining in the diluted specimen cell P3 is 40 pL. According to the automatic analyzer 1 of the present example, by supplying the diluted specimen from the single diluted specimen cell P3 to the plurality of reaction lines 6A and 6B in this manner, the remaining liquid amount per diluted specimen can be minimized. As a result, the use amount of the specimen can be greatly reduced.

### 2. Configuration of Diluted Specimen Cell Turntable 3

Next, a detailed configuration of the diluted specimen cell turntable 3 will be described with reference to FIGS. 10 to 12.

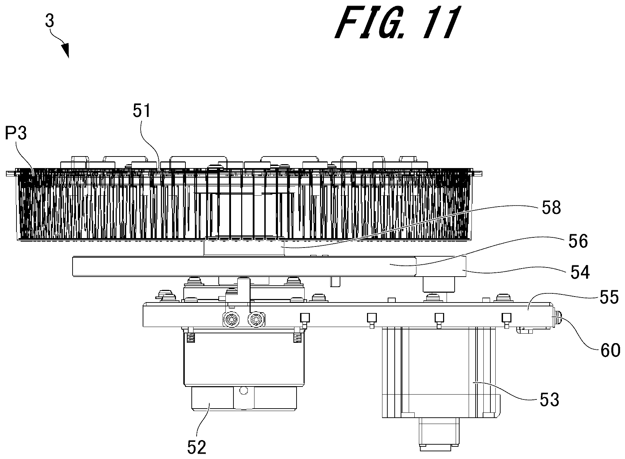

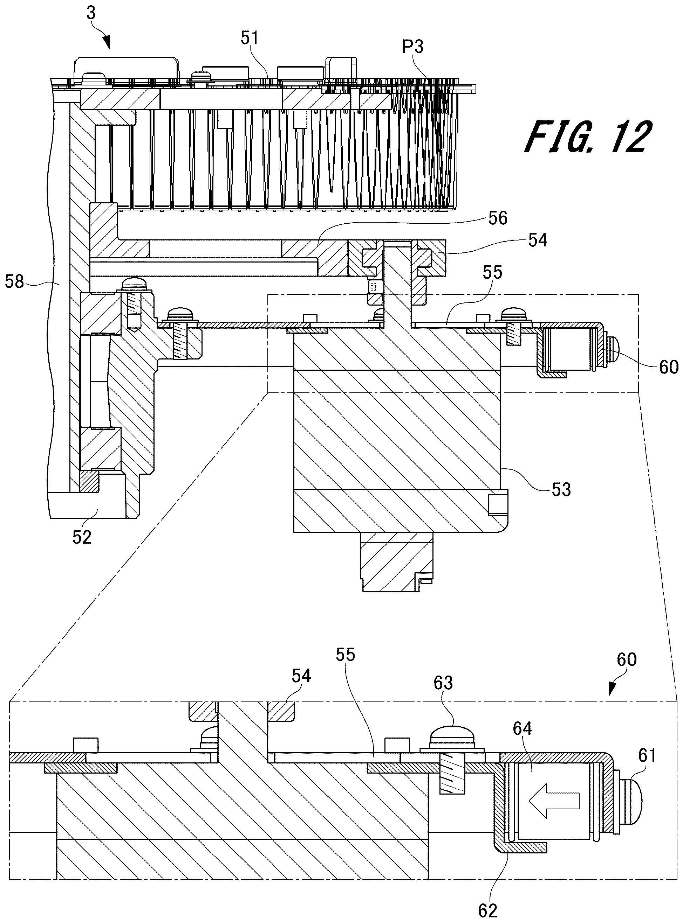

FIG. 10 is a perspective view illustrating the diluted specimen cell turntable 3, FIG. 11 is a side view illustrating the diluted specimen cell turntable 3, and FIG. 12 is an enlarged view illustrating a backlash adjustment mechanism of the diluted specimen cell turntable 3.

As illustrated in FIGS. 10 to 11, the diluted specimen cell turntable 3 includes a rotating body 51 on which the diluted specimen cell P3 is disposed, a rotating shaft 58, a shaft holder 52, a drive motor 53, a drive gear 54, a driven gear 56, a base plate 55, and a backlash adjustment mechanism 60.

The rotating body 51 is formed in a circular flat plate shape. A plurality of diluted specimen cells P3 are disposed along the circumferential direction of the rotating body 51 in the peripheral edge of the rotating body 51. The rotating body 51 is rotatably supported by the rotating shaft 58. The rotating shaft 58 is rotatably supported by the shaft holder 52, for example, by a bearing. The driven gear 56 is attached below the rotating body 51 or to the rotating shaft 58.

The driven gear 56 is meshed with the drive gear 54. The drive gear 54 is attached to a drive shaft of the drive motor 53. The drive motor 53 is provided on the base plate 55.

The base plate 55 is provided with the backlash adjustment mechanism 60. The amount of pressing force of the drive gear 54 against the driven gear 56 is adjusted by the backlash adjustment mechanism 60. The backlash adjustment mechanism 60 can reduce the backlash between the drive gear 54 and the driven gear 56 and can improve the positioning accuracy of the diluted specimen cell P3.

As illustrated in FIG. 12, the backlash adjustment mechanism 60 includes a spring fall prevention screw 61, an adjustment bracket 62, a fixing screw 63, and a coil spring 64. The adjustment bracket 62 is slidably fixed to an end of the base plate 55 via the fixing screw 63.

The drive motor 53 attached with the drive gear 54 is fixed to the adjustment bracket 62.

The adjustment bracket 62 faces the end of the base plate 55 and is disposed closer to the drive motor 53 than the end of the base plate 55 is. A coil spring 64 is interposed between the adjustment bracket 62 and the end of the base plate 55. The coil spring 64 is attached to the end of the base plate 55 by the spring fall prevention screw 61. Then, the adjustment bracket 62 receives a reaction force from the base plate 55 via the coil spring 64. This causes the drive motor 53 fixed to the adjustment bracket 62 to be pressed toward the driven gear 56. This can reduce the backlash between the drive gear 54 and the driven gear 56.

In the example illustrated in FIG. 10, an example in which two coil springs 64 are provided in the backlash adjustment mechanism 60 has been described, but the invention is not limited to this configuration, and the number of coil springs 64 may be one, or three or more. However, to stably press the drive motor 53 in parallel with the driven gear 56, it is preferable to provide two coil springs 64.

An example in which the gear mechanism is applied as the mechanism for rotating the diluted specimen cell turntable 3 has been described, but the present invention is not limited to this configuration. As a mechanism for rotating the diluted specimen cell turntable 3, for example, various other mechanisms such as a belt pulley mechanism and a direct drive mechanism may be applied.

Here, with the belt pulley mechanism, the influence of vibration due to an increase in positioning setting time is likely to occur because of the fluctuation of the belt tension at the time of starting and stopping. With the direct drive mechanism, it is necessary to use a larger motor to drive the inertial load of the rotating body 51 of the diluted specimen cell turntable 3 or the diluted specimen cell P3.

On the other hand, with the gear mechanism, there is a concern that positioning reproducibility deteriorates because of an influence of backlash caused by meshing between gears. However, the influence of the backlash can be reduced by the backlash adjustment mechanism 60 described above. Further, according to the gear mechanism, vibration can be suppressed because the settling time can be minimized. In addition, there is an advantage that the inertial load can be reduced by appropriately setting the gear teeth ratio, and driving can be performed with a relatively small motor. Thus, it is preferable to apply a gear mechanism as the mechanism for rotating the diluted specimen cell turntable 3.

### 3. Operation Speed of Diluted Specimen Cell Turntable 3

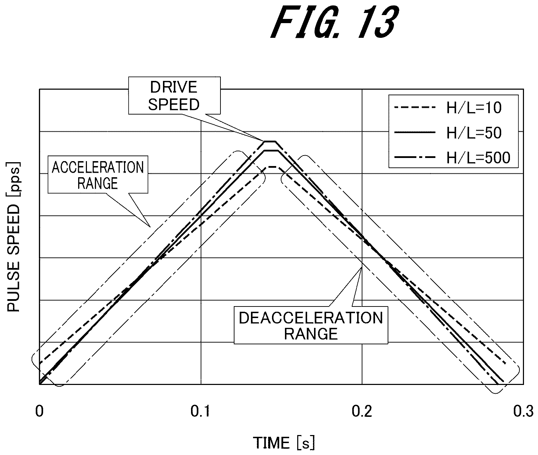

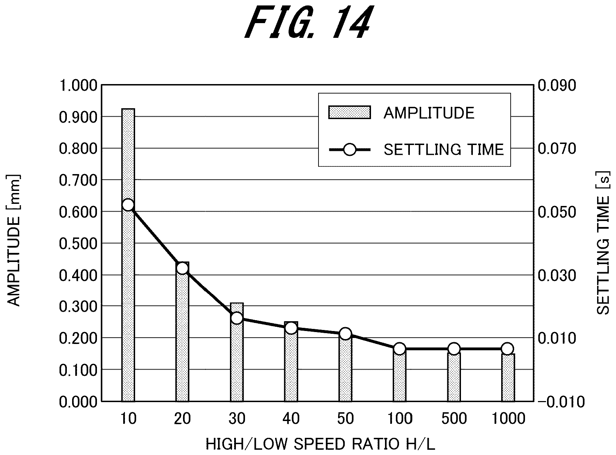

Next, the operation speed of the diluted specimen cell turntable 3 will be described with reference to FIGS. 13 and 14.

FIG. 13 is a diagram illustrating an example of the operation speed profile of the diluted specimen cell turntable 3.

FIG. 14 is a diagram illustrating the relationship between the high/low speed ratio and the amplitude/settling time of the diluted specimen cell turntable 3.

As illustrated in FIG. 13, at the start of the operation of the diluted specimen cell turntable 3, the operation starts at a low rotational speed, and reaches the drive rotational speed through an acceleration range. Thereafter, the rotation speed reaches a low speed again through the deceleration region, then the turntable stops. The operation speed profile of the diluted specimen cell turntable 3 can be determined by setting the entire operation time, the amount of movement, the acceleration time ratio, the deceleration time ratio, and the high/low speed ratio (H/L) that is the ratio between the low speed and the drive speed.

The three operation speed profiles illustrated in FIG. 13 illustrate comparison in a case where the operation time, the amount of movement, and the acceleration/deceleration time ratio are constant and only the high/low speed ratio is changed from 10 to 500. As illustrated in FIG. 13, as the high/low speed ratio (H/L) increases, the drive speed increases, and conversely, the low speed decreases. Then, it can be seen that the operation speed profile shape has a more acute angle.

On the other hand, since the minimum value of the low speed is a natural number of 1, it can be seen that a large difference is not observed in the operation speed profile shape even though the high/low speed ratio (H/L) is increased by a certain value or more.

FIG. 14 is a diagram illustrating a result of actually measuring the relationship between the vibration of the diluted specimen cell turntable 3 when the shape of the operation speed profile is changed and the settling time until the vibration is settled. Here, the vibration indicates the maximum value of the vibration in a tangential direction of the diluted specimen cell turntable 3 generated after the diluted specimen cell turntable 3 is rotated and stopped. The settling time indicates the time taken for the vibration to fall within a certain threshold value or less (in the example, ±0.05 mm or less). Regarding the speed profile, all the parameters other than the high/ow speed ratio (H/L) are the same.

It can be seen that when the high/low speed ratio (H/L) is controlled with a speed profile of 10, the amplitude of vibration after the end of the rotation operation of the diluted specimen cell turntable 3 reaches 0.9 mm. The settling time until the vibration is settled takes about 50 ms. On the other hand, when the high/low speed ratio (H/L) is controlled with a speed profile of 50, the amplitude of vibration is reduced to about 0.2 mm. It can be seen that the settling time is also shortened to about 10 ms. However, even though the high/low speed ratio (H/L) is increased to 100 or more, no significant improvement is observed in the amplitude and the settling time. Thus, the high/low speed ratio (H/L) is preferably 50.

### 4. Shape and Dimension of Diluted Specimen Cell P3

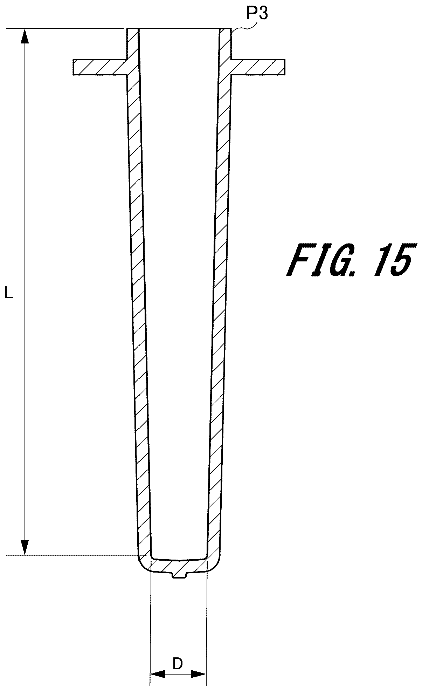

Next, the shape and dimensions of the diluted specimen cell P3 will be described with reference to FIGS. 15 to 17.

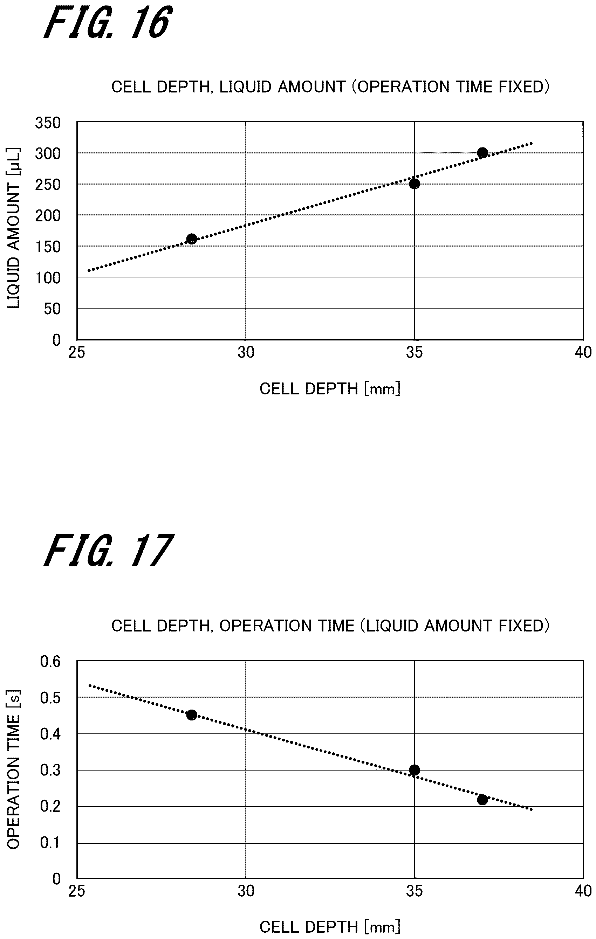

FIG. 15 is a sectional view illustrating the diluted specimen cell P3. FIG. 16 is a diagram illustrating the relationship between the depth and the liquid amount of the diluted specimen cell P3. FIG. 17 is a diagram illustrating the depth of the diluted specimen cell P3 and the operation time.

As illustrated in FIG. 15, the diluted specimen cell P3 is formed in a substantially cylindrical shape with a bottom. Here, in the acceleration/deceleration region of the speed profile in the rotation operation of the diluted specimen cell turntable 3, acceleration (including negative acceleration during deceleration) with respect to the tangential direction of the diluted specimen cell turntable 3 occurs. Because of this acceleration, the solution in the diluted specimen cell P3 also receives acceleration with respect to the tangential direction of the diluted specimen cell turntable 3.

When the operation of the diluted specimen cell turntable 3 reaches the drive speed, the centripetal force with respect to a radial direction of the diluted specimen cell turntable 3 becomes maximum. Then, a centrifugal force as a reaction force acts on the solution in the diluted specimen cell P3. In this manner, a large force always acts on the solution in the diluted specimen cell P3 during the rotation operation in the tangential direction or the radial direction of the diluted specimen cell turntable 3. To prevent the solution in the diluted specimen cell P3 from overflowing because of the action of the force of the acceleration or the centrifugal force, the shape and dimensions of the diluted specimen cell P3 are preferably set as follows.

As illustrated in FIG. 15, the diluted specimen cell P3 is formed in a substantially cylindrical shape having a bottomed cylindrical shape or a conical shape. In general, it is necessary to hold 150 µL to 300 µL of the diluted specimen in the diluted specimen cell P3. When the rotation operation is performed in a state where the liquid amount is held in the diluted specimen cell P3, the liquid level of the diluted specimen rises up to about 20% to 30%.

Thus, when the inside of the diluted specimen cell P3 is cleaned in the next step, it is necessary to place the cleaning liquid to a height equal to or higher than the height of the diluted specimen amount + 30%. Further, the rotation operation is performed also in a state where the cleaning liquid is placed in the diluted specimen cell P3. However, since the cleaning liquid may contain a surfactant, the surface tension of the liquid is smaller than that of the diluted specimen. In this case, even with the same operation profile, the amount of increase in the liquid level increases, and the amount increases by about 2.5 to 3 times as compared with the case of the diluted specimen. Thus, it is necessary to set a distance at which the cleaning solution does not overflow from the diluted specimen cell P3 even in this state as the cell height (depth) L.

For example, when 250 µL of the diluted specimen is placed in the diluted specimen cell P3, the liquid level of the diluted specimen is at the height of 17 mm from the bottom surface of the diluted specimen cell P3 at this time. When the diluted specimen cell turntable 3 is rotated in this state, the liquid level rises by about 20% to 30% as described above. Thus, in the next cleaning step, the cleaning liquid is dispensed to the height of 22 mm from the bottom of the diluted specimen cell P3.

Further, when the diluted specimen cell turntable 3 is rotated in this state, the liquid level of the cleaning liquid further rises by about +12.5 mm (5 mm × 2.5 times). Thus, the cleaning liquid reaches the height of about 29.5 mm from the bottom of the diluted specimen cell P3. Then, the height of 35 mm obtained by adding a margin distance of +5 mm to this height is the determined height of the diluted specimen cell P3. The total volume of the diluted specimen cell P3 including the margin distance is about 610 µL.

Next, it is possible to increase the volume by increasing the diameter of the diluted specimen cell P3. However, when the diluted specimen cell P3 is made too thick, the influence of the inertial force exceeds the surface tension of the liquid. Thus, when the diluted specimen cell turntable 3 is rotated under the same conditions, the solution overflows from the diluted specimen cell P3. Thus, the diameter of the diluted specimen cell P3 is preferably 6 mm or less at the maximum.

From the above, L/D, which is the ratio of the depth (L) to the diameter (D) of the diluted specimen cell P3, is preferably set to, for example, 8 to 10. Here, when L/D is set to be smaller than 8, overflow of liquid becomes remarkable. On the other hand, when L/D is larger than 10, overflow of the solution can be prevented. However, this is not preferable because the influence of the surface tension of the liquid increases, which adversely affects the cleaning action for the diluted specimen cell P3, and the shape restriction of the cleaning nozzle and the dispensing probe increases.

The material of the diluted specimen cell P3 described above is preferably a thermoplastic resin. However, as the material of the diluted specimen cell P3, for example, it is preferable to use various other materials such as a thermosetting resin, a photocurable resin, and glass.

FIG. 16 is a graph modeling the relationship between the cell shape and the liquid amount of the diluted specimen cell P3 illustrated in FIG. 15. In the example illustrated in FIG. 16, the operation time during which the diluted specimen cell turntable 3 rotates by 180 degrees is constant (for example, 0.3 s). As illustrated in FIG. 16, it can be seen that the liquid amount and the depth (cell depth) L of the diluted specimen cell P3 have a linear correlation. Thus, it can be seen that the depth of the diluted specimen cell P3 also needs to be increased to increase the liquid amount.

In addition, since the positioning operation is performed a plurality of times during one cycle operation, there is a restriction on the operation time per operation. In addition, the amount of liquid that can be held in the diluted specimen cell P3 is also required, and is, for example, 250 µL of a required holding amount. As described above, when the operation time is shortened, the liquid held in the diluted specimen cell P3 comes out because of the centrifugal force. Thus, it is necessary to increase the depth of the diluted specimen cell P3 to prevent the liquid from coming outside.

FIG. 17 is a diagram illustrating the relationship between the operation time and the cell depth L when the amount of liquid required to be held in the diluted specimen cell P3 is fixed to, for example, 250 µL.

As illustrated in FIG. 17, it can be seen that the cell depth of the diluted specimen cell P3 needs to be 35 mm or more to achieve the operation time of 0.3 s or less.

The present invention is not limited to the embodiment described above and illustrated in the drawings, and various modifications can be made without departing from the gist of the invention described in the claims.

For example, an example in which the present invention is applied to a biochemical analyzer used for analyzing a biological sample of blood or urine has been described as the automatic analyzer, but the present invention is not limited to this configuration, and the present invention can be applied to a device that performs other various analyses such as water quality and food.

In the automatic analyzer 1 according to the embodiment described above, an example in which the first reaction line 6A and the second reaction line 6B are concentrically disposed on one reaction turntable has been described, but the present invention is not limited to this configuration. For example, a plurality of reaction turntables may be provided, and the first reaction line 6A and the second reaction line 6B may be disposed on different reaction turntables. Further, the number of reaction lines is not limited to two, and three or more reaction lines may be provided.

In the present specification, words such as "parallel" and "orthogonal" are used, but these do not strictly mean only "parallel" and "orthogonal", but they may mean a state of "substantially parallel" or "substantially orthogonal" including "parallel" and "orthogonal" and in a range in which the function can be exhibited.

### Reference Signs List

- 1: automatic analyzer
- 1a: measurement unit
- 1b: control unit
- 2: sample turntable
- 3: diluted specimen cell turntable
- 4: first reagent turntable
- 4A: first reagent line
- 4B: second reagent line
- 5: second reagent turntable
- 5A: first reagent line
- 5B: second reagent line
- 6: reaction turntable
- 6A: first reaction line
- 6B: second reaction line
- 11: diluted specimen cell stirring mechanism
- 12: diluted specimen cell cleaning mechanism
- 13: first reaction stirring mechanism
- 14: second reaction stirring mechanism
- 15: multi-wavelength photometer
- 16: reaction cell cleaning mechanism
- 21: specimen dispensing unit
- 21A: specimen supply probe
- 22: diluted specimen dispensing unit
- 22A: first diluted specimen supply probe
- 22B: second diluted specimen supply probe
- 23: first reagent dispensing unit
- 23A: first reagent probe
- 23B: first reagent probe
- 24: second reagent dispensing unit
- 24A: second reagent probe
- 24B: second reagent probe
- 30: probe cleaning mechanism
- 31: probe cleaning mechanism
- 32A: probe cleaning mechanism
- 32B: probe cleaning mechanism
- 33A: probe cleaning mechanism
- 33B: probe cleaning mechanism
- 34A: probe cleaning mechanism
- 34B: probe cleaning mechanism
- 51: rotating body
- 52: shaft holder
- 53: drive motor
- 54: drive gear
- 55: base plate
- 56: driven gear
- 58: rotating shaft
- 60: backlash adjustment mechanism
- 62: adjustment bracket
- P2: specimen container
- P3: diluted specimen cell
- P4: first reagent container
- P5: second reagent container
- P6: reaction cell

## Claims

1. An automatic analyzer (1) comprising:
a diluted specimen cell turntable (3) having a plurality of diluted specimen cells (P3) that contains a diluted specimen that is a specimen that has been diluted;
a plurality of reaction lines (6A, 6B) to which the diluted specimen contained in a diluted specimen cell (P3) among the plurality of diluted specimen cells (P3) of the diluted specimen cell turntable (3) is supplied, in which the diluted specimen is reacted with a reagent; and
a diluted specimen dispensing unit (22) that supplies the diluted specimen contained in the diluted specimen cell (P3) of the diluted specimen cell turntable (3) to the plurality of reaction lines (6A, 6B), wherein
the diluted specimen dispensing unit (22) supplies the diluted specimen from one diluted specimen line provided in the diluted specimen cell turntable (3) to the plurality of reaction lines (6A, 6B).

2. The automatic analyzer (1) according to claim 1, wherein
the diluted specimen line is formed by arranging the plurality of diluted specimen cells (P3) side by side in a circumferential direction of the diluted specimen cell turntable (3).

3. The automatic analyzer (1) according to claim 2, further comprising:
a drive mechanism that rotates the diluted specimen cell turntable (3) along the circumferential direction; and
a control unit (1b) that controls the drive mechanism, wherein
the control unit (1b) controls the drive mechanism to move the diluted specimen cell turntable (3) by a predetermined amount along the circumferential direction, and
the control unit (1b) stops the diluted specimen cell turntable (3) a plurality of times at a time of a basic cycle.

4. The automatic analyzer (1) according to claim 3, wherein
the control unit (1b) stops the diluted specimen cell turntable (3) at least a number of times corresponding to the number of the plurality of reaction lines (6A, 6B) during an operation of the basic cycle.

5. The automatic analyzer (1) according to claim 4, further comprising:
a specimen dispensing unit (21) that supplies the specimen and a diluent to the diluted specimen cell (P3); and
a diluted specimen cell stirring mechanism (11) that stirs the diluted specimen contained in the diluted specimen cell (P3), wherein
the control unit (1b) controls the drive mechanism, the diluted specimen dispensing unit (22), the specimen dispensing unit (21), and the diluted specimen cell stirring mechanism (11), and performs, during the operation of the basic cycle, a supply operation of supplying the specimen and the diluent by using the specimen dispensing unit (21), a stirring operation by using the diluted specimen cell stirring mechanism (11), suction operation of sucking the diluted specimen contained in the diluted specimen cell (P3), and discharge operation of discharging the diluted specimen that has been sucked to the plurality of reaction lines (6A, 6B).

6. The automatic analyzer (1) according to claim 5, wherein
the control unit (1b) controls the drive mechanism, the diluted specimen dispensing unit (22), the specimen dispensing unit (21), and the diluted specimen cell stirring mechanism (11), performs the supply operation of supplying the specimen and the diluent, the stirring operation, and the discharge operation of discharging the diluted specimen to the plurality of reaction lines (6A, 6B) at a first stop operation of the diluted specimen cell turntable (3) during the operation of the basic cycle, and performs the suction operation of sucking the diluted specimen contained in the diluted specimen cell (P3) at a second or subsequent stop operation of the diluted specimen cell turntable (3).

7. The automatic analyzer (1) according to claim 3, wherein
the control unit (1b) performs a first operation and a second operation during the operation of the basic cycle,
moves the diluted specimen cell turntable (3) by an amount of basic movement in the first operation, and
moves the diluted specimen cell turntable (3) by any amount a plurality of times in the second operation.

8. The automatic analyzer (1) according to claim 3, wherein
the drive mechanism includes
a drive motor (53),
a drive gear (54) provided on a drive shaft of the drive motor (53), and
a driven gear (56) provided on the diluted specimen cell turntable (3) and meshed with the drive gear (54).

9. The automatic analyzer (1) according to claim 8, further comprising a backlash adjustment mechanism (60) that presses the drive gear (54) against the driven gear (56) .
